# EUROPEAN PATENT SPECIFICATION

(11) **EP 1 903 892 B1**
(45) Date of publication and mention of the grant of the patent: **08.04.2009**
(21) Application number: 06795269.7
(22) Date of filing: 03.07.2006
(51) Int. Cl.: A23L 1/187, A23L 1/00, A23P 1/08, A23C 9/13

(54) **FOODSTUFF**
NAHRUNGSMITTEL
PRODUIT ALIMENTAIRE

(30) Priority: 11.07.2005 GB 0514223; 11.07.2005 US 698221 P; 12.07.2005 GB 0514289
(43) Date of publication of application: 02.04.2008
(73) Proprietor: DANISCO A/S, 1001 Copenhagen K. (DK)
(72) Inventor: NIELSEN, Jens, Mogens, DK-8464 Galten (DK)
(74) Representative: Simcox, Michael Thomas
(86) International application number: PCT/IB2006/002241
(87) International publication number: WO 2007/007190

(56) References cited:
- EP-A- 0 686 354
- DE-A1- 3 240 068
- GB-A- 1 413 965
- US-A1- 2002 136 804
- PATENT ABSTRACTS OF JAPAN vol. 2000, no. 01, 31 January 2000 (2000-01-31) & JP 11 276098 A (SNOW BRAND MILK PROD CO LTD), 12 October 1999 (1999-10-12)

## Description

The present invention relates to a foodstuff comprising a colour migration barrier layer, a method of preparing such a foodstuff and the use of a composition as a colour migration barrier layer.

Many foodstuffs comprise multiple layers of different food materials with each layer having a different colour. Ripple type desserts are a typical example of such foodstuffs. The difference in the colours of the different food material layers creates a distinctive and pleasing visual effect which is important in presenting and marketing the foodstuff. Unfortunately, in many such foodstuffs, colours may migrate between the adjacent layers, resulting in a merging of the colours of the layers. For example, in a dairy dessert consisting of a white dairy portion in contact with a coloured fruit sauce portion, the colour from the fruit sauce portion may migrate quickly into the white dairy portion, which becomes coloured. This gives a much less favourable impression to a consumer and may lead to the foodstuff being withdrawn.

Whilst the use of barrier layers between foodstuffs is known, such barrier layers have been almost exclusively used to prevent or inhibit water migration. For example, EP 1080643 discloses a water barrier layer comprising a blend of a natural wax derived from sunflower wax, and glyceride materials, substantially being triglycerides and having a solid fat content (N-Value) at 20°C of at least 20. The majority of these earlier disclosures concentrate on the problem of water migration, and do not acknowledge the problem of colour migration at all. Where the problem of colour migration is mentioned, it is related solely to water activity. Thus, EP 0714608 states that "fruit purees and pieces preferably have the same a_{w} as the filing or lower to prevent colour migration out of the food ingredients" (page 3, line 41-42). Surprisingly, we have identified that the use of foodstuffs with similar water activities does not prevent colour migration between the foodstuff layers. However, this approach places a restriction on the food ingredients that can be used. In addition, the processes by which colour migration may occur are rather more complicated than suggested in EP 0714608. Document JP 11 276098 disclose a jelly food wherein migration of colour of the jelly layer into the cream layer is prevented.

Ideally, a consumer should be unaware of the presence of any barrier layer when the foodstuff is being consumed. Thus, a barrier layer should have organoleptic properties of taste, aftertaste and mouthfeel that are imperceptible to the consumer. In particular, the barrier layer should be rapid and clean melting, and provide a smooth, non-waxy mouthfeel.

The present invention alleviates the problems of the prior art.

In one aspect the present invention provides a foodstuff comprising:
(a) a first food material layer;
(b) a colour migration barrier layer;
(c) a second food material layer,
wherein the colour migration barrier layer is disposed between the first food material layer and the second food material layer and is an edible liquid oil composition comprising:
(i) an oil component; and
(ii) a fat, emulsifier, wax or mixture thereof, having a melting point of greater than 55°C;
wherein the oil component (i) has a solid fat content (N-value) at 20°C of less than 20.

In a further aspect of the invention, there is provided the use of an liquid oil composition for inhibiting and/or preventing colour migration between
a first food material layer and a second food material layer in foodstuff,
wherein the liquid oil composition is an edible liquid oil composition comprising:
(i) an oil component; and
(ii) a fat, emulsifier, wax or mixture thereof, preferably having a melting point of greater than 55°C; and preferably wherein the oil component (i) has a solid fat content (N-value) at 20°C of less than 20.

In a further aspect of the invention, there is provided a method of preparing a foodstuff according to any one of claims 1 to 18, comprising the steps of:
a) providing a first food material layer;
b) coating the first food material layer with a colour migration barrier layer;
c) coating the colour migration barrier layer with a second food material layer,
wherein the colour migration barrier layer is an edible liquid oil composition comprising:
(i) an oil component; and
(ii) a fat, emulsifier, wax or mixture thereof having a melting point of greater than 55°C;
wherein the oil component (i) has a solid fat content (N-value) at 20°C of less than 20.

### Oil component (i)

Preferably the oil component (i) is selected from rape seed oil, soy oil, sunflower oil, peanut oil, corn oil, cotton oil, safflower oil, olive oil, palm oil, partial hydrogenated oils, fractionated fats, fractionated oils, butter oil and mixtures thereof.

Preferably the oil component (i) comprises rape seed oil.

### Component (ii)

Preferably component (ii) is selected from fully hydrogenated fats, fractionated fats, emulsifiers, beeswax, candelilla wax, carnauba wax, jojoba wax, whale wax, paraffin wax, mineral wax, microcrystalline wax and mixtures thereof.

In one preferred aspect, component (ii) comprises a fat and a monoglyceride.

In another preferred aspect, component (ii) comprises a wax and a monoglyceride.

Preferably component (ii) comprises a fat. Preferably component (ii) comprises a fully hydrogenated fat. Preferably component (ii) comprises a fully hydrogenated high erucic acid rape seed oil.

Preferably component (ii) comprises an emulsifier.

Preferably component (ii) is selected from monoglycerides, diglycerides, esterified monoglycerides, sugar esters and mixtures thereof.

Preferably component (ii) is or comprises a monoglyceride.

Preferably component (ii) comprises distilled monoglycerides.

Preferably component (ii) comprises distilled monoglycerides having a melting point of greater than 55°C.

Preferably component (ii) comprises a wax. Preferably the wax is selected from beeswax, candelilla wax, carnauba wax, jojoba wax, whale wax, paraffin wax, mineral wax, microcrystalline wax and mixtures thereof.

Preferably component (ii) comprises beeswax.

Preferably component (ii) comprises beeswax and a monoglyceride.

Preferably component (ii) has a melting point of greater than 60°C. Preferably component (ii) has a melting point of greater than 65°C.

### Emulsifiers

As used herein emulsifiers are defined as polar components ranging from very low to very high polarity. The polar components includes ionic and non-ionic types. Nonlimiting examples of emulsifiers are poplar lipids such as monoglycerides, mono-diglycerides, acetic acid ester of mono-diglycerides, lactic acid ester of mono-diglycerides, citric acid ester of mono-diglycerides, mono- and di-acetyl tartaric acid esters of mono-diglycerides, sucrose esters of fatty acids, polyglycerol esters of fatty acids, fatty acids, sorbitan esters, sucroglycerider, lecithin and mixtures thereof.

Preferably the emulsifier is selected from monoglycerides and mono-diglycerides.

### Colour migration barrier layer (b)

Preferably the colour migration barrier layer (b) comprises:
component (i) in an amount of from 80 to 99.5 wt. %; and
component (ii) in an amount of from 0.5 to 20 wt. % based on the total barrier layer.

Preferably the colour migration barrier layer (b) comprises component (i) in an amount of from 90 to 99 wt. %; and component (ii) in an amount of from 1 to 10 wt. % based on the total barrier layer.

Preferably the colour migration barrier layer (b) comprises component (i) in an amount of from 96 to 99 wt. %; and component (ii) in an amount of from 1 to 4 wt. % based on the total barrier layer.

Preferably the colour migration barrier layer (b) comprises component (i) in an amount of from 97 to 99 wt. %; and component (ii) in an amount of from 1 to 3 wt. % based on the total barrier layer. Preferably the colour migration barrier layer (b) comprises component (i) in an amount of from 98 to 99 wt. %; and component (ii) in an amount of from 1 to 2 wt. % based on the total barrier layer.

### Food material

Preferably one of the food materials is a sauce or topping. Suitable sauces or toppings may be selected from fruit purees, fruit coulis, fruit sauces, syrups, jellies, caramel, chocolate and jams.

Preferably one of the food materials is selected from fruit purees, fruit coulis and fruit sauces.

Preferably one of the food materials is a dairy food. Suitable dairy foods may be selected from dairy dessert bases, ice creams, gelatos, creams, sherbets, yoghurts, custards, parfaits, mousses, and cheese.

Preferably the dairy food is a yoghurt. Preferably the yoghurt is selected from a frozen yoghurt, a set yoghurt and a thick yoghurt.

Preferably the dairy food is a custard. Preferably the custard is selected from a frozen custard, a set custard and a thick custard.

### First food material (a)

Preferably the first food material (a) is selected from fruit purees, fruit coulis and fruit sauces.

### Second food material (c)

Preferably the second food material (c) is a dairy food.

Preferably the second food material (c) is selected from dairy dessert bases and yoghurt.

Preferably the second food material (c) is a yoghurt. Preferably the yoghurt is selected from frozen yoghurt, set yoghurt and thick yoghurt.

### Foodstuff

Preferably the foodstuff is a dairy dessert. A dairy dessert is any milk based or milk containing dessert. In particular, dairy desserts may be selected from ice creams, gelatos, creams, sherbets, frozen yoghurt, set yoghurt, thick yoghurt, frozen custard, set custard, thick custard, parfaits, mousses, trifles, solidified cream cheese and cheesecakes.

In one aspect, the foodstuff is a frozen dessert. For the purposes of this application the term "frozen dessert" refers to any dessert which is frozen. In particular, frozen desserts may be selected from sorbets, flavoured ices, and frozen dairy desserts.

### Solid fat content

The solid fat content is an N-value. The N-value gives the percentage of fat which is solid or in the crystallised form at a given temperature. Thus, an N-value measured at 20°C of 30, indicates that 30% of the fat is in crystallised form at 20°C (i.e. the amount of solids at that temperature).

Preferably the oil component (i) has a solid fat content (N-value) at 20°C of less than 18; less than 15; less than 12; less than 10; less than 7; less than 5; less than 3.

In another aspect of the invention, preferably the colour migration barrier layer (b) has a solid fat content (N-value) at 20°C of less than 20; less than 18; less than 15; less than 12; less than 10; less than 7; less than 5; less than 3.

The solid fat content (N-value) may be an measured at 20°C by unstabilized NMR techniques. The solid fat content may be measured on a fat that has not been stabilised, that is a fat that has been subjected to the following pre-treatment. First, the sample is melted at 80°C, then cooled to 0°C and held at that temperature for 1 hour, then heated to 20°C and held at this measurement temperature for 0.5 hour before measuring the N-value.

The solid fat content is significant as it alters the melting profile of the colour migration barrier layer. This affects the organoleptic properties, in particular the mouthfeel. The mouthfeel of the barrier layer is particularly important for smooth foodstuffs, such as dairy desserts, as the mouthfeel is more noticeable to the consumer in such foodstuffs. With products that have a "crunchy" texture, for example, crackers or baked pastry cases, the mouthfeel of the barrier layer is less noticeable. Increasing the solid fat content of components in a colour migration barrier layer slows the melting of the barrier layer during consumption. This increased solid fat content can provide a more solid structure for the barrier layer, but may also result in a foodstuff with an unpleasant mouthfeel.

### Thickness of colour migration barrier layer (b)

Preferably the colour migration barrier layer (b) is from 0.01 mm to 2.0 mm thick.

Preferably the colour migration barrier layer is from 0.1 mm to 1.0 mm thick.

Aspects of the invention are defined in the appended claims.

### Water activity

In the present application, "water activity" (a_{w}) is the ratio of vapour pressure of water in the food of interest and vapour pressure of pure water at the same temperature.

In one aspect of the invention, the first food material layer (a) and the second food material layer (b) have different water activities. Preferably the difference in the water activity of the first food material layer (a) to the second food material layer (b) is greater than 0.1, preferably greater than 0.3.

In one preferred aspect of the invention, the first food material layer (a) and the second food material layer (b) have similar water activities. Preferably the difference in the water activity of the first food material layer (a) to the second food material layer (b) is less than 0.3; preferably less than 0.2; preferably less than 0.1; preferably less than 0.09; preferably less than 0.08; preferably less than 0.07; preferably less than 0.06; preferably less than 0.05.

It has been found that this aspect of the invention is generally applicable with a broad range of systems. Thus, in one preferred aspect of the invention there is provided a foodstuff comprising: (a) a first food material layer; (b) a colour migration barrier layer; (c) a second food material layer; wherein the colour migration barrier layer is disposed between the first food material layer and the second food material layer and is an edible liquid oil composition comprising: (i) an oil component; and (ii) a fat, emulsifier, wax or mixture thereof having a melting point of greater than 55°C; wherein the difference in the water activity of the first food material layer (a) to the second food material layer (b) is less than 0.3.

In a further aspect of the present invention, the water activity gradient (i.e. from high water activity to low water activity) is opposite to the colour migration gradient (i.e. from strong colour to weak colour). Strong colours give low intensities in image analysis whilst weak (light) colours give higher intensities in image analysis.

### Colour difference

Preferably the first food material layer and the second food material layer are a different colour to each other.

A difference in colour between the first food material layer and the second food material layer can be defined as a threshold value for the difference in colour intensity between the two layers measured by image analysis recorded in calibrated light intensity. The colour intensity is measured on whichever colour channel (red, green or blue) generates the biggest intensity difference between the two layers. The colour intensity is measured in 8 bit colour depth generating 256 different colour levels. The zero of these colour levels is defined as completely dark and 255 as completely white (or the opposite). A colour difference can be defined as abs(Intensity of first food material layer - Intensity of second food material layer). If this value is bigger than the threshold value there is a colour difference. The threshold value can be set to 3. Preferably the threshold value is 5; preferably the threshold value is 10; preferably the threshold value is 15; preferably the threshold value is 20.

### Other Aspects

In one aspect of the invention, the first food material layer or second food material layer does not comprise a baked flour system.

In a further aspect of the invention, when the first food material layer comprises a baked flour system, the second food material layer is a food layer other than a food layer selected from one or more of creams, custards, jellies, ice cream, sauces, fruit, vegetables and jam.

In a further aspect of the invention, when the first food material layer comprises a pastry baked flour system, the second food material layer is a food layer other than a custard.

In a further aspect of the invention, when the colour barrier layer comprises an oil with a solid fat content of 20% or higher (at 20°C) the first food material layer or second food material layer does not comprise a baked flour system.

The present invention will now be described in further detail by way of example only with reference to the accompanying figures in which:-
Figure 1 shows a graph indicating colour migration gradient between a fruit layer and a dairy layer measured using back scattering of light;
Figure 2 shows colour migration between a dairy layer and a fruit layer of a reference sample without any colour migration barrier;
Figure 3 shows an analogous dairy layer and fruit layer to the reference sample which also contains a 300 µm colour migration barrier layer of a mixture of 2% bees wax and 98% rape seed oil;
Figure 4 shows a graph indicating colour migration gradient between two food layers measured using intensity of light;
Figure 5 shows a graph indicating how colour gradient is measured;
Figure 6 shows a creme caramel product in which the problem of colour migration can be clearly seen on the left hand side of the product.

The present invention will now be described in further detail in the following examples.

### EXAMPLES

GRINDSTED® Pectin LC 710, GRINDSTED® LBG 147, GRINDSTED® Carrageenan CL 392 FLX and GRINDSTED Xanthan 80 are all commercially available from Danisco A/S.

Experiments were carried out using a black current ripple and a white dessert base. These were prepared using the following general methods

### General Method - Black Current Ripple

Experiments were carried out using an ice cream ripple with the following formulation.

### Formulation

| **Ingredients** | **%** | **% Soluble solids (SS)** |
|---|---|---|
| GRINDSTED® Pectin LC 710 | 0.30 | 0.30 |
| GRINDSTED® LBG 147 | 0.10 | 0.10 |
| Water (dose I) | 13.00 | - |
| Sugar (dose I) | 2.00 | 2.00 |
| | | |
| Blackcurrant, 16% SS | 23.00 | 3.68 |
| Blackcurrant concentrate, 65% SS | 5.00 | 3.25 |
| Sugar (dose II) | 55.00 | 55.00 |
| Calcium lactate, pentahydrate | 0.039 | 0.039 |
| Water (dose II) | 5.00 | - |
| | | |
| Potassium sorbate, 20% w/v | 0.25 | 0.05 |
| Tri-Sodium citrate, 30% w/v | 20 ml | - |
| Blackcurrant Flavouring U35938 | 0.05 | - |
| | | |
| **Total** | 103.69 | 64.42 |
| **Evaporation** | 3.69 | |
| **Yield** | 100.00 | |
| **Final soluble solids** | 65% | |
| **Final pH** | 3.6 | |
| **Filling temperature** | 65°C | |

The black current ripple was prepared using the following procedure:
1) Dry-blend pectin, LBG and sugar (dose I);
2) Dissolve the blend in hot water (80°C), agitating well;
3) Pour fruit/concentrate and sugar (dose II) into the cooking pan and bring the blend to the boil;
4) Add the pectin solution and continue evaporating until a soluble solid content of 65% is obtained;
5) Mix Calcium lactate with water (dose II);
6) Add the calcium slurry to the fruit/pectin blend;
7) Add enough Sodium citrate solution to obtain a pH value of 3.6;
8) Check the content of soluble solids;
9) Add flavouring and cool to filling temperature (65°C) and fill.

Thus, this black current ripple is made using blackcurrant and blackcurrant concentrate and is based on GRINDSTED® Pectin LC 710 and GRINDSTED® LBG 147. This ripple can still be pumped, even if it has a high viscosity. Pumping the ripple provides a smooth and shiny surface. Using the *swirl* equipment, a final product can be obtained where ripple and ice cream are incorporated well.

### General Method - White Dessert Base

Experiments were carried out using a white dessert base with the following formulation.

| **Ingredient** | **Dosage %** |
|---|---|
| Cream, (fat content 38%) | 8.30 |
| Whole milk, (fat content 3.5%) | 81.35 |
| Sucrose | 9.00 |
| Starch E1422, waxy maize | 0.80 |
| GRINDSTED® Carrageenan CL 392 FLX | 0.25 |
| GRINDSTED Xanthan 80 | 0.20 |
| Vanilla Flavouring 3981, NI "low cost" | 0.10 |

The white dessert base was prepared using the following mixing procedure:
1) Pre-mix carrageenan and xanthan with 10 parts of sugar;
2) Mix all other dry ingredients;
3) Add all dry ingredients to the milk at 40°C;
4) Hydrate for 30 minutes before pasteurisation while stirring.

This was followed by the following batch procedure:
1) Pass the homogeniser (upstream) - no pressure;
2) Heat treat at 90°C/5 minutes;
3) Cool to 20-30°C;
4) Fill on top of the cups with sauce at the bottom.

### General Method - Applying a colour migration barrier layer

A sample of black current ripple was placed in the bottom of small cups at 10-20°C and a colour migration barrier composition was applied by spraying the hot (80°C) and melted composition on top of the ripple to give a colour migration barrier layer of 300 µm thickness. The composition was allowed to set by cooling to ambient temperature. The composition may be stored at 5°C at this stage before application of the dairy dessert base. Then a white dairy dessert base was applied on the colour migration barrier layer at 20-30°C. The sample was stored at 5°C for up to two weeks and examined each week for colour migration, syneresis in the dairy dessert base and thinning of the ripple. Furthermore, the samples were examined for formation of a hard layer in the section of the dairy dessert that was in contact with black current ripple, or in the applied barrier layer itself.

All four parameters were scaled from 0-5 with 0 as the best performance and 5 the worst. The sample was compared with a reference sample which was prepared in an analogous fashion except without the application of a colour migration barrier composition. The results are listed either for one week, e.g. 2, or as per week 1-week 2, e.g: 2-3.

From examination of the reference samples, it was found that the colour from the fruit sauce portion migrates quickly into the white dairy portion, which becomes coloured. At the same time changes in texture occur, and water from the dairy portion migrates into the fruit portion, which become more fluid. Eventually syneresis also takes place. Thus, colour migrates in the opposite direction to water migration. Therefore, colour migration is not a direct consequence of water migration as was suggested by EP 0714608.

### Example 1

A sample produced as described in the general method with a composition consisting of 2% bees wax and 98% rape seed oil, which were melted together at 80°C, was tested.

| Parameter | Sample | Reference |
|---|---|---|
| Inhibition of colour migration | 0-1 | 5-5 |
| Prevent syneresis: | 0-1 | 5-5 |
| Prevent thinning of the ripple: | 1-1 | 5-5 |
| Formation of hard layer : | 0-0 | 5-5 |

### Example 2

A sample produced as described in the general method with a composition consisting of 1.5% bees wax and 98.5% rape seed oil.

| Parameter | Sample | Reference |
|---|---|---|
| Inhibition of colour migration | 0 | 5 |
| Prevent syneresis: | 0 | 5 |
| Prevent thinning of the ripple: | 0 | 5 |
| Formation of hard layer : | 0 | 5 |

### Example 3

A sample produced as described in the general method with a composition consisting of 4% distilled monoglycerides with a fatty acid composition mainly dominated by palmetic and stearic acid and 96% rape seed oil was tested. The monoglyceride and the rape seed oil were melted together at 80°C prior to the spraying process.

| Parameter | Sample | Reference |
|---|---|---|
| Inhibition of colour migration | 0-0 | 5 |
| Prevent syneresis: | 0-0 | 5 |
| Prevent thinning of the ripple: | 1-0 | 5 |
| Formation of hard layer : | 0-0 | 5 |

### Example 4

A sample produced as described in the general method with a composition consisting of 4% fully hydrogenated fat with a fatty acid composition of mainly C16 and C18 and 96% rape seed oil, which were melted together at 80°C, was tested.

| Parameter | Sample | Reference |
|---|---|---|
| Inhibition of colour migration | 0-1 | 5-5 |
| Prevent syneresis: | 1-3 | 5-5 |
| Prevent thinning of the ripple: | 3-3 | 5-5 |
| Formation of hard layer : | 0-0 | 5-5 |

### Example 5

A sample produced as described in the general method with a composition consisting of 1% bees wax and 99% rape seed oil, which were melted together at 80°C, was tested.

| Parameter | Sample | Reference |
|---|---|---|
| Inhibition of colour migration | 2-2 | 5-5 |
| Prevent syneresis: | 2-2 | 5-5 |
| Prevent thinning of the ripple: | 3-3 | 5-5 |
| Formation of hard layer : | 2-3 | 5-5 |

### Example 6

A sample produced as described in the general method with a composition consisting of 3% bees wax and 97% rape seed oil, which were melted together at 80C, was tested.

| Parameter | Sample | Reference |
|---|---|---|
| Inhibition of colour migration | 0-1 | 5-5 |
| Prevent syneresis: | 0-1 | 5-5 |
| Prevent thinning of the ripple: | 1-1 | 5-5 |
| Formation of hard layer : | 3-3 | 5-5 |

### Example 7

A sample produced as described in the general method with a composition consisting of 4% fully hydrogenated fat and 96% rape seed oil. The 4% fully hydrogenated fat comprises 9 parts triglyceride with a fatty acid composition with approx. 40% behenic acid and 1 part distilled monoglyceride with a fatty acid composition mainly consisting of C16 and C18. The composition was melted together at 80°C, was tested.

| Parameter | Sample | Reference |
|---|---|---|
| Inhibition of colour migration | 0-1 | 5-5 |
| Prevent syneresis: | 0-0 | 5-5 |
| Prevent thinning of the ripple: | 0-1 | 5-5 |
| Formation of hard layer : | 0-0 | 5-5 |

### Comparative Example 1

A sample produced as described in the general method with a composition consisting of an acetylated monoglyceride with a 70% degree of acetylation and a fatty acid composition consisting of mainly C16:0 and C18:0.

| Parameter | Sample | Reference |
|---|---|---|
| Inhibition of colour migration | 0 | 5 |
| Prevent syneresis: | 0 | 5 |
| Prevent thinning of the ripple: | 0 | 5 |
| Formation of hard layer : | 5 | 4 |

### Comparative Example 2

A sample produced as described in the general method with a composition consisting of 10% bees wax and 90% acetylated monoglyceride from Comparative Example 1, which were melted together at 80°C, was tested

| Parameter | Sample | Reference |
|---|---|---|
| Inhibition of colour migration | 0 | 5 |
| Prevent syneresis: | 0 | 5 |
| Prevent thinning of the ripple: | 0 | 5 |
| Formation of hard layer : | 5 | 4 |

### Comparative Example 3

A sample produced as described in the general method with a composition consisting of pure rape seed oil.

| Parameter | Sample | Reference |
|---|---|---|
| Inhibition of colour migration | 5-5 | 5-5 |
| Prevent syneresis: | 5-5 | 5-5 |
| Prevent thinning of the ripple: | 5-5 | 5-5 |
| Formation of hard layer : | 5-5 | 5-5 |

### Comparative Example 4

A sample produced as described in the general method with a composition consisting of 1% soy lecithin and 99% acetylated monoglyceride from Comparative Example 1, which were melted together at 80°C, was tested.

| Parameter | Sample | Reference |
|---|---|---|
| Inhibition of colour migration | 0 | 5 |
| Prevent syneresis: | 0 | 5 |
| Prevent thinning of the ripple: | 0 | 5 |
| Formation of hard layer : | 5 | 5 |

### Comparative Example 5

A sample produced as described in the general method with a composition consisting of 2% soy lecithin and 98% acetylated monoglycerides from Comparative Example 1, which were melted together at 80°C, was tested.

| Parameter | Sample | Reference |
|---|---|---|
| Inhibition of colour migration | 0 | 5 |
| Prevent syneresis: | 0 | 5 |
| prevent thinning of the ripple: | 0 | 5 |
| Formation of hard layer : | 5 | 5 |

### Comparative Example 6

A sample produced as described in the general method with a composition consisting of pure acetylated monoglycerides with a degree of acetylation of 90% and a fatty acid composition mainly consisting of C16 and C18, was tested.

| Parameter | Sample | Reference |
|---|---|---|
| Inhibition of colour migration | 4 | 5 |
| Prevent syneresis: | 3 | 5 |
| Prevent thinning of the ripple: | 4 | 5 |
| Formation of hard layer : | 0 | 5 |

### Comparative Example 7

A samples produced as described in the general method with a composition consisting of pure acetylated monoglycerides with an degree of acetylation of 90% and iodine value of 40, was tested. The iodine value was measured using AOCS Method CD1/25, which was modified by the use of chloroform rather than carbon tetrachloride.

| Parameter | Sample | Reference |
|---|---|---|
| Inhibition of colour migration | 5 | 5 |
| Prevent syneresis: | 5 | 5 |
| Prevent thinning of the ripple: | 4 | 5 |
| Formation of hard layer : | 0 | 5 |

### Comparative Example 8

A sample produced as described in the general method with a composition consisting of pure distilled monoglycerides with an iodine value of approx. 100, was tested. The iodine value was measured using AOCS Method CD1/25, which was modified by the use of chloroform rather than carbon tetrachloride.

| Parameter | Sample | Reference |
|---|---|---|
| Inhibition of colour migration | 5 | 5 |
| Prevent syneresis: | 5 | 5 |
| Prevent thinning of the ripple: | 4 | 5 |
| Formation of hard layer : | 4 | 5 |

### Comparative Example 9

A sample produced as described in the general method with a composition consisting of a mixture of 60% acetylated monoglycerides with an degree of acetylation of 70% and a fatty acid composition mainly consisting of C12 and 40% acetylated monoglycerides with an degree of acetylation of 70% and a fatty acid composition mainly consisting of C16 and C18, was tested.

| Parameter | Sample | Reference |
|---|---|---|
| inhibition of colour migration | 4 | 5 |
| Prevent syneresis: | 4 | 5 |
| Prevent thinning of the ripple: | 4 | 5 |
| Formation of hard layer : | 5 | 5 |

### Comparative Example 10

A sample produced as described in the general method with a composition consisting of a mixture of 40% acetylated monoglycerides with an degree of acetylation of 70% and a fatty acid composition mainly consisting of C12 and 60% acetylated monoglycerides with an degree of acetylation of 70% and a fatty acid composition mainly consisting of C16 and C18, was tested.

| Parameter | Sample | Reference |
|---|---|---|
| Inhibition of colour migration | 0 | 5 |
| Prevent syneresis: | 2 | 5 |
| Prevent thinning of the ripple: | 2 | 5 |
| Formation of hard layer : | 5 | 5 |

### Comparative Example 11

A sample produced as described in the general method with a composition consisting of a mixture of 80% acetylated monoglycerides with an degree of acetylation of 70% and a fatty acid composition mainly consisting of C16 and C18:1 and 20% acetylated monoglycerides with an degree of acetylation of 70% and a fatty acid composition mainly consisting of C16 and C18, was tested.

| Parameter | Sample | Reference |
|---|---|---|
| Inhibition of colour migration | 2 | 5 |
| Prevent syneresis: | 3 | 5 |
| Prevent thinning of the ripple: | 3 | 5 |
| Formation of hard layer : | 5 | 5 |

### Comparative Example 12

A sample produced as described in the general method with a composition consisting of a mixture of 60% acetylated monoglycerides with an degree of acetylation of 70% and a fatty acid composition mainly consisting of C16 and C18:1 and 40% acetylated monoglycerides with an degree of acetylation of 70% and a fatty acid composition mainly consisting of C16 and C18, was tested.

| Parameter | Sample | Reference |
|---|---|---|
| Inhibition of colour migration | 0 | 5 |
| Prevent syneresis: | 1 | 5 |
| Prevent thinning of the ripple: | 0 | 5 |
| Formation of hard layer : | 5 | 5 |

### Solid Fat Content

The solid fat content of several samples of fat blends were measured at 20°C using the IUPAC 2.150a method. The melting point of some of these fat blends was measured using AOCS 3-25 method.

| Sample | Composition | Solid Fat Content at 20°C |
|---|---|---|
| 1 | 25 parts soy oil (hydrogenated to melting point 41 °C) + | 10% |
| | 75 parts liquid soy oil | |
| 2 | 25 parts palm oil (hydrogenated to melting point 43°C) + | 9% |
| | 75 parts rape seed oil | |
| 3 | 40 parts soy oil (hydrogenated to melting point 35°C) + | 17% |
| | 10 parts soy oil (hydrogenated to melting point 41 °C) + | |
| | 50 parts liquid soy oil | |
| 4 | 100 parts rape seed oil | 0% |

### Test method for colour migration:

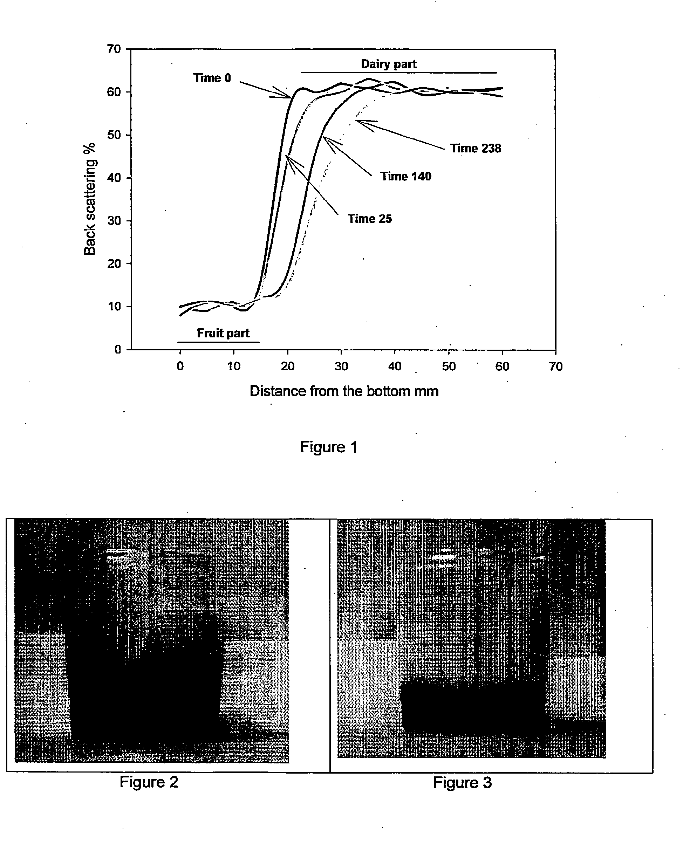

Colour migration can be measured by use of Turbiscan MA 2000 (Formulation, 10, Impasse Borde Brasse, 31240 L'Union France), which is a scanning instrument measuring the transmission and back scattering light using a near infrared light at 850 nm. The transmission is measured at zero degrees and the back scattering is measured at 135 degrees to the light source. The instrument scans from bottom to the top of the samples. Any difference in the colour is clearly seen as a change in the back scattering. In the examples, the coloured fruit layer has a very different back scattering intensity compared to the white dairy layer, see Figure 1. The change in the back scattering in the dairy layer depends on the storage time (in hours at 5°C). The pure fruit layer has a back scattering intensity of approx. 10% and the pure dairy layer around 60%. Due to colour migration the dairy layer in contact with the fruit layer eventually experiences a reduction in the back scattering.

The effects of colour migration can also be observed by a visual inspection of samples. Colour migration is seen as a change in the colour of the part of dairy layer in contact with the fruit layer. When there is no barrier layer, see Figure 2, a gradual change in colour is observed between the fruit and dairy layers. In contrast, a sharp change in colour is observed in a sample containing a colour migration barrier, see Figure 3.

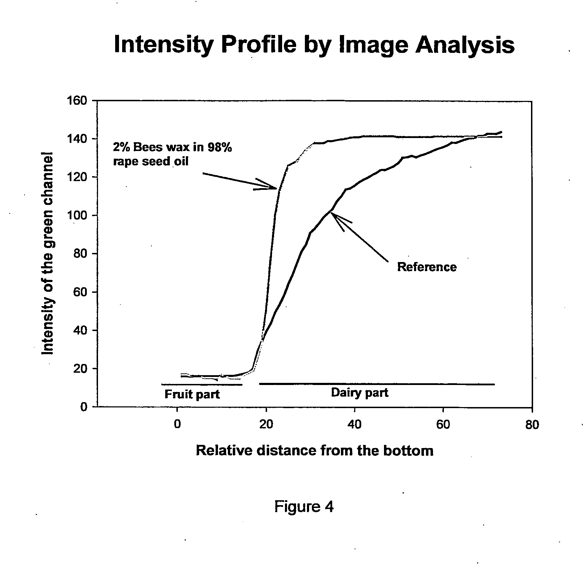

Another method of testing for colour migration is to apply image analysis to images of the samples to measure the intensity profile in a narrow band of approx. 10 mm from bottom to the top. Dark colours are measured as low intensities and light colours as high intensities with a total range of 0-255. Figure 4 shows the intensity profile for the green channel for the two samples shown in Figures 2 and 3. It is readily apparent from Figure 4 that the intensity profile of the sample with a barrier has a much steeper gradient when moving from the fruit layer to the dairy layer compared with the reference sample. In the reference sample the colours from the fruit part makes the lowest part of the dairy dessert darker thereby reducing the colour intensity.

The image analysis was carried out using Adobe Photoshop 6.0 software available through Adobe Systems Incorporated, with additional plug-ins IPTK 5.0 available from ReindeerGraphics Corporation.

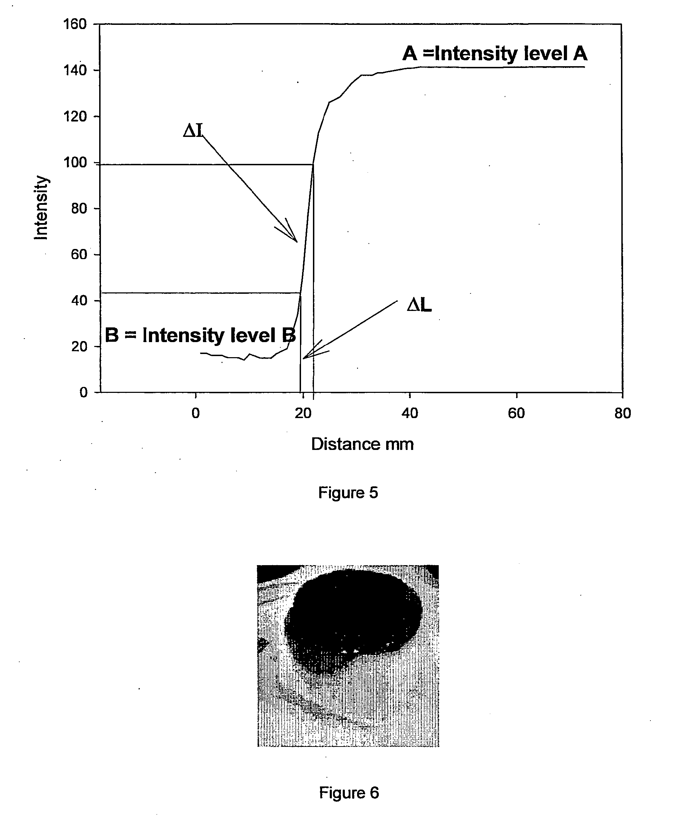

The colour gradient can be used together with the Turbiscan or image analysis methods, as a way to quantify the barrier effect. As shown in Figure 5:
**A** is the average intensity level for the brightest part of the layered food.
**B** is the average intensity level for the darkest part of the layered food.
ΔI/ΔL is the average slope of the linear part of the line between the intensity level B and intensity level A.

Colour gradient, CG, is defined as CG = abs(ΔI/ΔL)/abs(A-B).
CG equals infinity for a very excellent product and zero for a very bad product.

## Claims

1. A foodstuff comprising:
(a) a first food material layer;
(b) a colour migration barrier layer;
(c) a second food material layer,
wherein the colour migration barrier layer is disposed between the first food material layer and the second food material layer and is an edible liquid oil composition comprising:
(i) an oil component; and
(ii) a fat, emulsifier, wax or mixture thereof, having a melting point of greater than 55°C;
wherein the oil component (i) has a solid fat content (N-value) at 20°C of less than 20.

2. A foodstuff according to claim 1, wherein the oil component (i) is selected from rape seed oil, soy oil, sunflower oil, peanut oil, corn oil, cotton oil, safflower oil, olive oil, palm oil, partial hydrogenated oils, fractionated fats, fractionated oils, butter oil and mixtures thereof.

3. A foodstuff according to claim 1 or 2, wherein the oil component (i) comprises rape seed oil.

4. A foodstuff according to any one of the preceding claims, wherein component (ii) is selected from fully hydrogenated fats, fractionated fats, emulsifiers, beeswax, candelilla wax, carnauba wax, jojoba wax, whale wax, paraffin wax, mineral wax, microcrystalline wax and mixtures thereof.

5. A foodstuff according to any one of the preceding claims, wherein component (ii) comprises an emulsifier.

6. A foodstuff according to claim 5, wherein the emulsifier is selected from monoglycerides, diglycerides, esterified monoglycerides, sugar esters and mixtures thereof.

7. A foodstuff according to any one of the preceding claims, wherein component (ii) comprises distilled monoglycerides having a melting point of greater than 55°C.

8. A foodstuff according to any one of the preceding claims, wherein component (ii) comprises beeswax.

9. A foodstuff according to claim 1 wherein component (ii) comprises a monoglyceride and beeswax.

10. A foodstuff according to any one of the preceding claims, wherein the colour migration barrier layer (b) comprises:
component (i) in an amount of from 80 to 99.5 wt. %; and
component (ii) in an amount of from 0.5 to 20 wt. % based on the total barrier layer.

11. A foodstuff according to any one of the preceding claims, wherein the colour migration barrier layer (b) comprises:
component (i) in an amount of from 96 to 99 wt. %; and
component (ii) in an amount of from 1 to 4 wt. % based on the total barrier layer.

12. A foodstuff according to any one of the preceding claims, wherein the oil component (i) has a solid fat content (N-value) at 20°C of less than 15.

13. A foodstuff according to any one of the preceding claims, wherein the first food material (a) is selected from fruit purees, fruit coulis and fruit sauces.

14. A foodstuff according to any one of the preceding claims, wherein the second food material (c) is a dairy food.

15. A foodstuff according to any one of the preceding claims, wherein the second food material (c) is a yoghurt.

16. A foodstuff according to any one of the preceding claims, wherein the foodstuff is a dairy dessert.

17. A foodstuff according to any one of the preceding claims, wherein the foodstuff is a frozen dessert.

18. A foodstuff according to any one of the preceding claims, wherein the colour migration barrier layer (b) is from 0.01 mm to 2.0 mm thick.

19. A foodstuff according to any one of the preceding claims, wherein the colour migration barrier layer is from 0.1 mm to 1.0 mm thick.

20. Use of a liquid oil composition for inhibiting and/or preventing colour migration between
a first food material layer and a second food material layer in foodstuff,
wherein the liquid oil composition is an edible liquid oil composition comprising:
(i) an oil component; and
(ii) a fat, emulsifier, wax or mixture thereof having a melting point of greater than 55°C;
wherein the oil component (i) has a solid fat content (N-value) at 20°C of less than 20.

21. Use of a liquid oil composition according to claim 20, wherein the oil component (i) has a melting point of greater than 55°C.

22. Use of a liquid oil composition according to any one of claims 20 to 21, wherein the liquid oil composition is **characterised by** the features of any one of claims 2 to 19.

23. A method of preparing a foodstuff according to any one of claims 1 to 19, comprising the steps of:
a) providing a first food material layer;
b) coating the first food material layer with a colour migration barrier layer;
c) coating the colour migration barrier layer with a second food material layer,
wherein the colour migration barrier layer is an edible liquid oil composition comprising:
(i) an oil component; and
(ii) a fat, emulsifier, wax or mixture thereof having a melting point of greater than 55°C;
wherein the oil component (i) has a solid fat content (N-value) at 20°C of less than 20.

## Patentansprüche

1. Nahrungsmittel, welches umfaßt:
(a) eine Schicht eines ersten Nahrungsmittelmaterials,
(b) eine Farbmigration-Barriereschicht,
(c) eine Schicht eines zweiten Nahrungsmittelmaterials,
wobei die Farbmigration-Barriereschicht zwischen der Schicht des ersten Nahrungsmittelmaterials und der Schicht des zweiten Nahrungsmittelmaterials angeordnet ist und eine eßbare flüssige Ölzusammensetzung ist, die folgendes umfaßt:
(i) eine Ölkomponente und
(ii) ein Fett, ein Emulgiermittel, ein Wachs oder ein Gemisch davon mit einem Schmelzpunkt von über 55°C, wobei die Ölkomponente (i) einen Festfettgehalt (N-Wert) bei 20°C von weniger als 20 hat.

2. Nahrungsmittel nach Anspruch 1, wobei die Ölkomponente (i) unter Rapssamenöl, Sojaöl, Sonnenblumenöl, Erdnußöl, Maisöl, Baumwollöl, Färberdistelöl, Olivenöl, Palmöl, teilweise hydrierten Ölen, fraktionierten Fetten, fraktionierten Ölen, Butteröl und Gemischen davon ausgewählt ist.

3. Nahrungsmittel nach Anspruch 1 oder 2, wobei die Ölkomponente (i) Rapssamenöl umfaßt.

4. Nahrungsmittel nach einem der vorangegangenen Ansprüche, wobei Komponente (ii) unter vollständig hydrierten Fetten, fraktionierten Fetten, Emulgiermitteln, Bienenwachs, Candelillawachs, Carnaubawachs, Jojobawachs, Walwachs, Paraffinwachs, Mineralwachs, mikrokristallinem Wachs und Gemischen davon ausgewählt ist.

5. Nahrungsmittel nach einem der vorangegangenen Ansprüche, wobei Komponente (ii) ein Emulgiermittel umfaßt.

6. Nahrungsmittel nach Anspruch 5, wobei das Emulgiermittel unter Monoglyceriden, Diglyceriden, veresterten Monoglyceriden, Zuckerestern und Gemischen davon ausgewählt ist.

7. Nahrungsmittel nach einem der vorangegangenen Ansprüche, wobei Komponente (ii) destillierte Monoglyceride mit einem Schmelzpunkt von über 55°C umfaßt.

8. Nahrungsmittel nach einem der vorangegangenen Ansprüche, wobei Komponente (ii) Bienenwachs umfaßt.

9. Nahrungsmittel nach Anspruch 1, wobei Komponente (ii) ein Monoglycerid und Bienenwachs umfaßt.

10. Nahrungsmittel nach einem der vorangegangenen Ansprüche, wobei die Farbmigration-Barriereschicht (b) bezogen auf die gesamte Barriereschicht
Komponente (i) in einer Menge von 80 bis 99,5 Gew.-% und
Komponente (ii) in einer Menge von 0,5 bis 20 Gew.-% umfaßt.

11. Nahrungsmittel nach einem der vorangegangenen Ansprüche, wobei die Farbmigration-Barriereschicht (b) bezogen auf die gesamte Barriereschicht
Komponente (i) in einer Menge von 96 bis 99 Gew.-% und
Komponente (ii) in einer Menge von 1 bis 4 Gew.-% umfaßt.

12. Nahrungsmittel nach einem der vorangegangenen Ansprüche, wobei die Ölkomponente (i) einen Festfettgehalt (N-Wert) bei 20°C von kleiner als 15 hat.

13. Nahrungsmittel nach einem der vorangegangenen Ansprüche, wobei das erste Nahrungsmittelmaterial (a) unter Fruchtpürees, Fruchtcoulis und Fruchtsoßen ausgewählt ist.

14. Nahrungsmittel nach einem der vorangegangenen Ansprüche, wobei das zweite Nahrungsmittelmaterial (c) ein Milchprodukt ist.

15. Nahrungsmittel nach einem der vorangegangenen Ansprüche, wobei das zweite Nahrungsmittelmaterial (c) ein Joghurt ist.

16. Nahrungsmittel nach einem der vorangegangenen Ansprüche, wobei das Nahrungsmittel ein Milchdessert ist.

17. Nahrungsmittel nach einem der vorangegangenen Ansprüche, wobei das Nahrungsmittel ein gefrorenes Dessert ist.

18. Nahrungsmittel nach einem der vorangegangenen Ansprüche, wobei die Farbmigration-Barriereschicht (b) 0,01 mm bis 2,0 mm dick ist.

19. Nahrungsmittel nach einem der vorangegangenen Ansprüche, wobei die Farbmigration-Barriereschicht 0,1 mm bis 1,0 mm dick ist.

20. Verwendung einer flüssigen Ölzusammensetzung zum Hemmen und/oder Verhindern der Farbmigration zwischen
einer Schicht eines ersten Nahrungsmittelmaterials und einer Schicht eines zweiten Nahrungsmittelmaterials in einem Nahrungsmittel,
wobei die flüssige Ölzusammensetzung eine eßbare flüssige Ölzusammensetzung ist, die folgendes umfaßt:
(i) eine Ölkomponente und
(ii) ein Fett, ein Emulgiermittel, ein Wachs oder ein Gemisch davon mit einem Schmelzpunkt von über 55°C, wobei die Ölkomponente (i) einen Festfettgehalt (N-Wert) bei 20°C von kleiner als 20 hat.

21. Verwendung einer flüssigen Ölzusammensetzung nach Anspruch 20, wobei die Ölkomponente (i) einen Schmelzpunkt von über 55°C hat.

22. Verwendung einer flüssigen Ölzusammensetzung nach einem der Ansprüche 20 bis 21,
wobei die flüssige Ölzusammensetzung durch die Merkmale gemäß einem der Ansprüche 2 bis 19 **gekennzeichnet** ist.

23. Verfahren zum Herstellen eines Nahrungsmittels nach einem der Ansprüche 1 bis 19, welches die folgenden Stufen umfaßt:
a) Bereitstellen einer Schicht eines ersten Nahrungsmittelmaterials,
b) Beschichten der Schicht des ersten Nahrungsmittelmaterials mit einer Farbmigration-Barriereschicht,
c) Beschichten der Farbmigration-Barriereschicht mit einer Schicht eines zweiten Nahrungsmittelmaterials,
wobei die Farbmigration-Barriereschicht eine eßbare flüssige Ölzusammensetzung ist, die folgendes umfaßt:
(i) eine Ölkomponente und
(ii) ein Fett, ein Emulgiermittel, ein Wachs oder ein Gemisch davon mit einem Schmelzpunkt von über 55°C, wobei die Ölkomponente (i) einen Festfettgehalt (N-Wert) bei 20°C von kleiner als 20 hat.

## Revendications

1. Denrée alimentaire comprenant :
(a) une première couche de substance alimentaire ;
(b) une couche faisant barrière à la migration de couleur ;
(c) une seconde couche de substance alimentaire,
dans laquelle la couche faisant barrière à la migration de couleur est disposée entre la première couche de substance alimentaire et la seconde couche de substance alimentaire et est une composition d'huile liquide comestible comprenant :
(i) un constituant consistant en une huile ; et
(ii) une matière grasse, un émulsionnant, une cire ou un de leurs mélanges, ayant un point de fusion supérieur à 55°C ;
dans laquelle le constituant consistant en une huile (i) a une teneur en matière grasse solide (valeur de N) à 20°C inférieure à 20.

2. Denrée alimentaire suivant la revendication 1, dans laquelle le constituant (i) consistant en une huile est choisi entre l'huile de colza, l'huile de soja, l'huile de tournesol, l'huile d'arachide, l'huile de maïs, l'huile de cotonnier, l'huile de carthame, l'huile d'olive, l'huile de palme, des huiles partiellement hydrogénées, des matières grasses fractionnées, des huiles fractionnées, l'huile de beurre et leurs mélanges.

3. Denrée alimentaire suivant la revendication 1 ou 2, dans laquelle le constituant (i) consistant en une huile comprend de l'huile de colza.

4. Denrée alimentaire suivant l'une quelconque des revendications précédentes, dans laquelle le constituant (ii) est choisi entre des matières grasses totalement hydrogénées, des matières grasses fractionnées, des émulsionnants, la cire d'abeille, la cire de candelilla, la cire de carnauba, la cire de jojoba, la cire de baleine, la cire paraffinique, une cire minérale, la cire microcristalline et leurs mélanges.

5. Denrée alimentaire suivant l'une quelconque des revendications précédentes, dans laquelle le constituant (ii) comprend un émulsionnant.

6. Denrée alimentaire suivant la revendication 5, dans laquelle l'émulsionnant est choisi entre des monoglycérides, des diglycérides, des monoglycérides estérifiés, des sucre-esters et leurs mélanges.

7. Denrée alimentaire suivant l'une quelconque des revendications précédentes, dans laquelle le constituant (ii) comprend des monoglycérides distillés ayant un point de fusion supérieur à 55°C.

8. Denrée alimentaire suivant l'une quelconque des revendications précédentes, dans laquelle le constituant (ii) comprend de la cire d'abeille.

9. Denrée alimentaire suivant la revendication 1, dans laquelle le constituant (ii) comprend un monoglycéride et de la cire d'abeille.

10. Denrée alimentaire suivant l'une quelconque des revendications précédentes, dans laquelle la couche faisant barrière à la migration de couleur (b) comprend :
le constituant (i) en une quantité de 80 à 99,5 % en poids ; et
le constituant (ii) en une quantité de 0,5 à 20 % en poids sur la base de la couche de barrière totale.

11. Denrée alimentaire suivant l'une quelconque des revendications précédentes, dans laquelle la couche faisant barrière à la migration de couleur (b) comprend :
le constituant (i) en une quantité de 96 à 99 % en poids ; et
le constituant (ii) en une quantité de 1 à 4 % en poids sur la base de la couche de barrière totale.

12. Denrée alimentaire suivant l'une quelconque des revendications précédentes, dans laquelle le constituant
(i) consistant en une huile a une teneur en matière grasse solide (valeur de N) à 20°C inférieure à 15.

13. Denrée alimentaire suivant l'une quelconque des revendications précédentes, dans laquelle la première substance alimentaire (a) est choisie entre des purées de fruits, des coulis de fruits et des sauces aux fruits.

14. Denrée alimentaire suivant l'une quelconque des revendications précédentes, dans laquelle la seconde substance alimentaire (c) est un produit à base de lait.

15. Denrée alimentaire suivant l'une quelconque des revendications précédentes, dans laquelle la seconde substance alimentaire (c) est un yaourt.

16. Denrée alimentaire suivant l'une quelconque des revendications précédentes, ladite denrée alimentaire étant un dessert à base de lait.

17. Denrée alimentaire suivant l'une quelconque des revendications précédentes, ladite denrée alimentaire étant un dessert congelé.

18. Denrée alimentaire suivant l'une quelconque des revendications précédentes, dans laquelle la couche faisant barrière à la migration de couleur (b) a une épaisseur de 0,01 à 2,0 mm.

19. Denrée alimentaire suivant l'une quelconque des revendications précédentes, dans laquelle la couche faisant barrière à la migration de couleur a une épaisseur de 0,1 à 1,0 mm.

20. Utilisation d'une composition d'huile liquide pour l'inhibition et/ou la prévention de la migration de couleur entre
une première couche de substance alimentaire et une seconde couche de substance alimentaire dans une denrée alimentaire,
dans laquelle la composition d'huile liquide est une composition d'huile liquide comestible comprenant :
(i) un constituant consistant en une huile ; et
(ii) une matière grasse, un émulsionnant, une cire ou un de leurs mélanges, ayant un point de fusion supérieur à 55°C ;
le constituant (i) consistant en une huile ayant une teneur en matière grasse solide (valeur de N) à 20°C inférieure à 20.

21. Utilisation d'une composition d'huile liquide suivant la revendication 20, dans laquelle le constituant (i) consistant en une huile a un point de fusion supérieur à 55°C.

22. Utilisation d'une composition d'huile liquide suivant l'une quelconque des revendications 20 et 21, dans laquelle la composition d'huile liquide est **caractérisée par** les caractéristiques de l'une quelconque des revendications 2 à 19.

23. Procédé pour la préparation d'une denrée alimentaire suivant l'une quelconque des revendications 1 à 19, comprenant les étapes consistant à :
a) fournir une première couche de substance alimentaire ;
b) enrober la première couche de substance alimentaire avec une couche faisant barrière à la migration de couleur ;
c) enrober la couche faisant barrière à la migration de couleur avec une seconde couche de substance alimentaire,
dans lequel la composition d'huile liquide est une composition d'huile liquide comestible comprenant :
(i) un constituant consistant en une huile ; et
(ii) une matière grasse, un émulsionnant, une cire ou un de leurs mélanges, ayant un point de fusion supérieur à 55°C ;
le constituant (i) consistant en une huile ayant une teneur en matière grasse solide (valeur de N) à 20°C inférieure à 20.
